# EUROPÄISCHE PATENTANMELDUNG

(11) **EP 3 298 933 A1**
(43) Veröffentlichungstag der Anmeldung: **28.03.2018**
(21) Anmeldenummer: 17186928.2
(22) Anmeldetag: 18.08.2017
(51) Int. Cl.: A47J 31/40, A47J 31/56

(54) **VERFAHREN UND VORRICHTUNG ZUR ZUBEREITUNG EINES HEISSGETRÄNKS**

(30) Priorität: 26.09.2016 DE 102016118142
(71) Anmelder: Gebr. Graef GmbH & Co. KG, 59757 Arnsberg (DE)
(72) Erfinder: Baumann, Wolfgang, 59494 Ense (DE)
(74) Vertreter: Manske, Jörg

(57) **Zusammenfassung**

Vorrichtung zur Zubereitung eines Heißgetränks, umfassend ein Reservoir (2) für Wasser, Heizmittel, mit denen aus dem Reservoir (2) entnommenes Wasser erhitzt werden kann, Aufbewahrungsmittel (7) für ein Ausgangsmaterial für das Heißgetränk, sowie Steuermittel, die im Betrieb der Vorrichtung die Entnahme einer für eine vorgegebene Menge des zuzubereitenden Heißgetränks benötigten Wassermenge aus dem Reservoir (2) veranlassen, die die Heizmittel ansteuern, so dass sie die entnommene Wassermenge erhitzen, und die eine Zuführung der erhitzten Wassermenge zu dem Ausgangsmaterial für das Heißgetränk bewirken.

## Beschreibung

Die vorliegende Erfindung betrifft ein Verfahren zur Zubereitung eines Heißgetränks, insbesondere eines Kaffees, gemäß dem Oberbegriff des Anspruchs 1 sowie eine Vorrichtung zur Zubereitung eines Heißgetränks, insbesondere eines Kaffees, gemäß dem Oberbegriff des Anspruchs 9.

Ein Verfahren und eine Vorrichtung der vorgenannten Art sind aus der US 5,765,467 bekannt. Bei der darin beschriebenen Vorrichtung ist ein Reservoir über einen Auslassstutzen mit einem Heizbehälter verbunden, dessen Oberseite geschlossen ist. An der Unterseite des Heizbehälters ist eine Auslassöffnung angeordnet, die von einer federbelasteten Verschlussplatte verschlossen ist. Die Auslassöffnung führt zu einer Aufnahme für Kaffeepulver.

Wenn in das Reservoir Wasser eingebracht wird, füllt sich entsprechend auch der Heizbehälter mit Wasser bis der Luftdruck über der Flüssigkeit dem Flüssigkeitsdruck in dem Auslassstutzen entspricht. Anschließend wird beispielsweise durch Betätigen einer Taste eine Heizung eingeschaltet, die das Wasser in dem Heizbehälter erwärmt. Durch die Erwärmung wird ein stabförmiges Bauteil dazu veranlasst, sich in Längsrichtung auszudehnen. Das stabförmige Bauteil drückt gegen die Kraft der Feder die Verschlussplatte nach unten, so dass das erwärmte Wasser aus der Auslassöffnung austreten und auf das Kaffeepulver gelangen kann.

Dadurch sinkt der Flüssigkeitsspiegel in dem Heizbehälter, was wegen des sich verringernden Drucks über der Flüssigkeit zu einem Nachströmen kalten Wassers aus dem Reservoir in den Heizbehälter führt. Die dadurch hervorgerufene Temperaturabsenkung in dem Heizbehälter führt zu einer Verringerung der Länge des stabförmigen Bauteils, so dass die Auslassöffung wieder verschlossen wird. Nach entsprechender Erwärmung des Wassers beginnt die Öffnung der Auslassöffnung und das Austreten des erwärmten Wassers sowie das anschließende Nachströmen von kühlem Wasser erneut, bis sämtliches Wasser aus dem Reservoir im erwärmten Zustand auf das Kaffeepulver geführt wurde.

Als nachteilig hierbei erweisen sich die nur begrenzten Einflussmöglichkeiten des Benutzers auf die Menge des zu brühenden Kaffees. Insbesondere wird bei jedem Brühvorgang letztlich der gesamte Inhalt des Reservoirs für das Brühen des Kaffees verwendet.

Das der vorliegenden Erfindung zugrunde liegende Problem ist die Angabe eines Verfahrens der eingangs genannten Art sowie die Schaffung einer Vorrichtung der eingangs genannten Art, bei denen der Benutzer gezielt Einfluss auf die Menge des zu erzeugenden Heißgetränks nehmen kann.

Dies wird erfindungsgemäß durch ein Verfahren der eingangs genannten Art mit den kennzeichnenden Merkmalen des Anspruchs 1 sowie durch eine Vorrichtung der eingangs genannten Art mit den kennzeichnenden Merkmalen des Anspruchs 9 erreicht. Die Unteransprüche betreffen bevorzugte Ausgestaltungen der Erfindung.

Gemäß Anspruch 1 ist vorgesehen, dass aus dem Reservoir die Wassermenge entnommen wird, die für eine vorgegebene Menge des zuzubereitenden Heißgetränks benötigt wird. Damit wird nicht die komplette im Reservoir befindliche Wassermenge für die Zubereitung des Heißgetränks verwendet. Vielmehr kann der Benutzer gezielt vorgeben, welche Menge erzeugt werden soll. Dies kann beispielsweise durch die Anwahl einer Anzahl von Tassen des zuzubereitenden Heißgetränks geschehen. Ein genaues Abmessen der innerhalb des Reservoirs für die gewünschte Menge des zuzubereitenden Heißgetränks aufgenommenen Wassermenge, wie es zum Beispiel bei herkömmlichen Filterkaffeemaschinen vorgesehen ist, bei denen die komplette im Reservoir befindliche Wassermenge für die Zubereitung des Heißgetränks verwendet und erhitzt wird, kann somit in vorteilhafter Weise entfallen. Dadurch wird die Handhabung erheblich erleichtert.

Es kann insbesondere vorgesehen sein, dass die Vorgabe der Anzahl der Tassen direkt über eine entsprechende Bedienoberfläche der Vorrichtung erfolgen kann, beispielsweise durch Betätigen einer dafür vorgesehenen Taste oder über einen Touchscreen.

Das zuzubereitende Heißgetränk ist vorzugsweise ein Kaffee, insbesondere ein Filterkaffee. Es besteht jedoch durchaus auch die Möglichkeit, dass das Heißgetränk ein Tee oder ein Kakao ist.

Es kann vorgesehen sein, dass die Temperatur der entnommenen Wassermenge gemessen wird, insbesondere vor dem Zuführen zu dem Ausgangsmaterial. Auf diese Weise kann durch entsprechende Steuermechanismen erreicht werden, dass das auf das Ausgangsmaterial, insbesondere das Kaffeepulver, auftreffende Wasser eine vorgegebene Temperatur aufweist. Die Temperatur kann beispielsweise für Tee zwischen 75° und 99° C liegen. Beispielsweise für Filterkaffee kann eine optimale Temperatur zwischen 90° und 96° C liegen.

Es besteht die Möglichkeit, dass die Erhöhung der Temperatur in einem Durchlauferhitzer erfolgt, wobei insbesondere die Messung der Temperatur in Strömungsrichtung hinter dem Durchlauferhitzer erfolgt. Alternativ oder zusätzlich kann vorgesehen sein, dass die Temperatur und/oder die Menge des Wassers in dem Reservoir gemessen werden. Es besteht die Möglichkeit, dass die Verweildauer des Wassers in dem Durchlauferhitzer in Abhängigkeit von der gemessenen Temperatur beziehungsweise den gemessenen Temperaturen geregelt wird, wobei insbesondere die Durchflussgeschwindigkeit durch Ansteuern einer Pumpe geregelt wird, die das aus dem Reservoir entnommene Wasser durch den Durchlauferhitzer pumpt. Wenn die Temperaturdifferenz zwischen der Temperatur in dem Reservoir und der Temperatur hinter dem Durchlauferhitzer groß ist, wird die Durchflussgeschwindigkeit vergleichsweise klein gewählt, wohingegen bei kleinerer Temperaturdifferenz die Durchflussgeschwindigkeit vergleichsweise groß gewählt werden kann.

Es kann vorgesehen sein, dass bei einer Wassermenge in dem Reservoir, die kleiner ist als die Wassermenge, die für die Menge des zuzubereitenden Heißgetränks benötigt wird, ein von einem Benutzer wahrnehmbares Signal ausgegeben wird. Auf diese Weise wird sichergestellt, dass der Benutzer das Reservoir vor der Zubereitung des Heißgetränks nachfüllt, wenn die im Reservoir vorhandene Wassermenge nicht für die gewünschte Menge Heißgetränk ausreicht.

Es besteht die Möglichkeit, dass zu Beginn des Zubereitungsvorgangs eine aufgeheizte Wassermenge, die kleiner ist als die Wassermenge, die für die Menge des zuzubereitenden Heißgetränks benötigt wird, dem Ausgangsmaterial für das Heißgetränk zugeführt wird, woraufhin die Wasserzuführung zu dem Ausgangsmaterial für eine vorgegebene Zeit unterbrochen wird. Nachdem das heiße Wasser mit dem Ausgangsmaterial, insbesondere dem Kaffeepulver, eine vorgegebene Zeitspanne in Wechselwirkung getreten ist, wird der Zubereitungsvorgang fortgesetzt. Dieses Aufbringen einer vergleichsweise geringen Menge Wassers auf das Kaffeepulver zu Beginn des Brühvorgangs erhöht die Qualität des aufzubrühenden Kaffees. Mit anderen Worten handelt es sich hierbei um eine Art Vorbrühfunktion vor dem Beginn des eigentlichen Brühvorgangs, die zum Beispiel eine Zeitdauer von etwa 30s haben kann. Es hat sich gezeigt, dass durch diese Maßnahme bei der Zubereitung von Kaffee die Aroma-Entfaltung erheblich verbessert werden kann, da die Freisetzung von Bitterstoffen verhindert beziehungsweise zumindest deutlich reduziert werden kann.

Es kann vorgesehen sein, dass nach einer vorgegebenen Anzahl von Zubereitungsvorgängen seit der letzten Entkalkung ein von einem Benutzer wahrnehmbares Signal ausgegeben wird. Insbesondere kann dabei nach einer weiteren vorgegebenen Anzahl von Zubereitungsvorgängen ohne Durchführung einer Entkalkung die Vorrichtung signalisieren, dass erst nach Durchführung einer Entkalkung die Zubereitung eines Heißgetränks wieder ermöglicht wird. Es kann dabei vorgesehen sein, dass die Vorrichtung eine Entkalkungsroutine umfasst, bei der die Vorrichtung beispielsweise bei reduzierter Temperatur von etwa 60° C automatisch gereinigt wird. Durch dieses Entkalken kann eine gleichbleibende Wasserbeziehungsweise Heißgetränkequalität sichergestellt werden.

Gemäß Anspruch 9 ist vorgesehen, dass die Vorrichtung Steuermittel umfasst, die im Betrieb der Vorrichtung die Entnahme einer für eine vorgegebene Menge des zuzubereitenden Heißgetränks benötigten Wassermenge aus dem Reservoir veranlassen, die die Heizmittel ansteuern, so dass sie die entnommene Wassermenge erhitzen, und die eine Zuführung der erhitzten Wassermenge zu dem Ausgangsmaterial für das Heißgetränk bewirken. Insbesondere kann die Vorrichtung dabei ein erfindungsgemäßes Verfahren durchführen.

Es besteht die Möglichkeit, dass die Vorrichtung ein Ventil umfasst, das zwischen dem Reservoir und den Heizmitteln angeordnet ist.

Durch Öffnen dieses Ventils gelangt Wasser in die insbesondere als Durchlauferhitzer ausgebildeten Heizmittel, wobei vorzugsweise durch die Ansteuerung einer Pumpe die Durchflussgeschwindigkeit und damit die Temperatur des auf das Ausgangsmaterial auftreffenden Wassers geregelt werden kann.

Es kann vorgesehen sein, dass die Vorrichtung einen Füllstandssensor umfasst, der in dem Reservoir angeordnet ist. Mittels des Füllstandssensors kann ermittelt werden, ob die im Reservoir befindliche Wassermenge für die von dem Benutzer gewünschte Menge des Heißgetränks ausreicht. Vorzugsweise kann eine elektronische Anzeigevorrichtung vorgesehen sein, die mit dem Füllstandssensor zusammenwirkt und einem Benutzer anzeigt, ob sich noch genug Wasser innerhalb des Reservoirs für die gewünschte Menge des zuzubereitenden Heißgetränks befindet.

Es besteht die Möglichkeit, dass die Vorrichtung einen Aufnahmebehälter für das zubereitete Heißgetränk und separate Heizmittel für das Warmhalten des Aufnahmebehälters umfasst. Die Heizmittel können insbesondere eine separat zuschaltbare PTC-Heizung in einem Gehäuseboden der Vorrichtung sein. Die Heizmittel können zu Beginn des Brühvorgangs automatisch für eine bestimmte Zeitdauer (zum Beispiel 30 Minuten) aktiviert werden und halten die Temperatur des Heißgetränks auf einen bestimmten vorgegebenen oder von einem Benutzer vorgebbaren Wert. Wenn das Heißgetränk Kaffee ist, ist eine Warmhaltetemperatur von ca. 80° C vorteilhaft.

Es kann vorgesehen sein, dass die Vorrichtung eine Filterkaffeemaschine und/oder eine Espressomaschine ist. Es kann sich beispielsweise um eine Espressomaschine handeln, mit der zusätzlich Filterkaffee zubereitet werden kann. Bei Espressomaschinen werden in der Regel Trägervorrichtungen verwendet, die einen Handgriff und Verbindungsmittel für die Verbindung mit der Maschine, insbesondere Bajonettverbindungsmittel, aufweisen und beispielsweise gemahlenen Kaffee aufnehmen können. Bei Verwendung einer geeigneten Trägervorrichtung für die Espressomaschine kann dabei sowohl beispielsweise frisch gemahlener Kaffee, als auch in einem Behältnis vorgehaltener Kaffee zu Espresso verarbeitet werden. Dabei kann das Behältnis vorzugsweise als Kaffeepad ausgebildet sein. Weiterhin kann die Trägervorrichtung auch Aufnahmemittel für die Aufnahme einer Kaffeekapsel aufweisen. Damit können von einer entsprechenden Vorrichtung sowohl Filterkaffee, als auch Espresso zubereitet werden, wobei beispielsweise frisch gemahlener Kaffee oder ein Kaffeepad oder eine Kaffeekapsel zu Espresso verarbeitet werden können. Vorzugsweise kann die Vorrichtung einen Brühkopf mit einer Mehrzahl von Wasseraustrittsöffnungen, insbesondere mit acht Wasseraustrittsöffnungen, aufweisen, die einen relativ kleinen Durchmesser aufweisen und eine großflächige Kaffeemehlbenetzung und damit ein optimales Herauslösen der Kaffeearomen ermöglichen. Der Brühkopf kann insbesondere aus Edelstahl hergestellt sein.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Rückansicht einer erfindungsgemäßen Vorrichtung mit abgenommener hinterer Abdeckung;

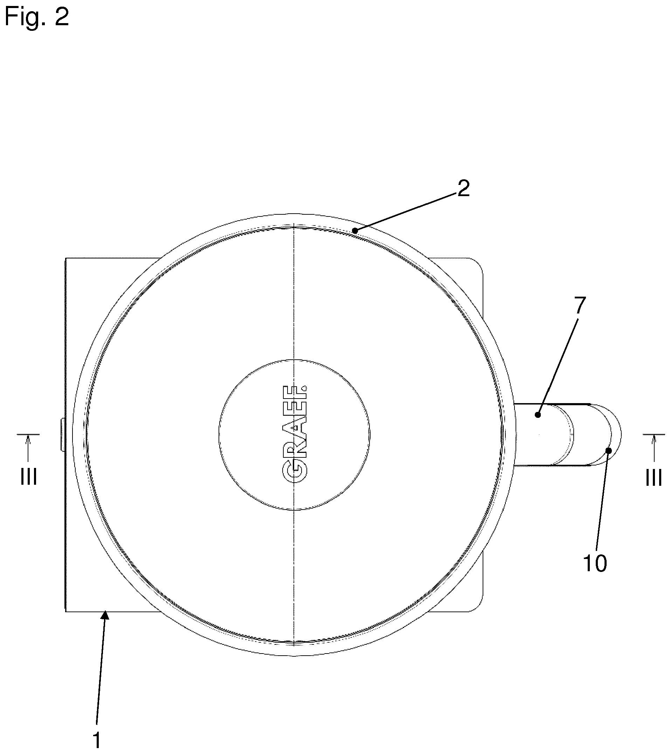

- Fig. 2: eine Draufsicht auf die Vorrichtung gemäß Fig. 1;

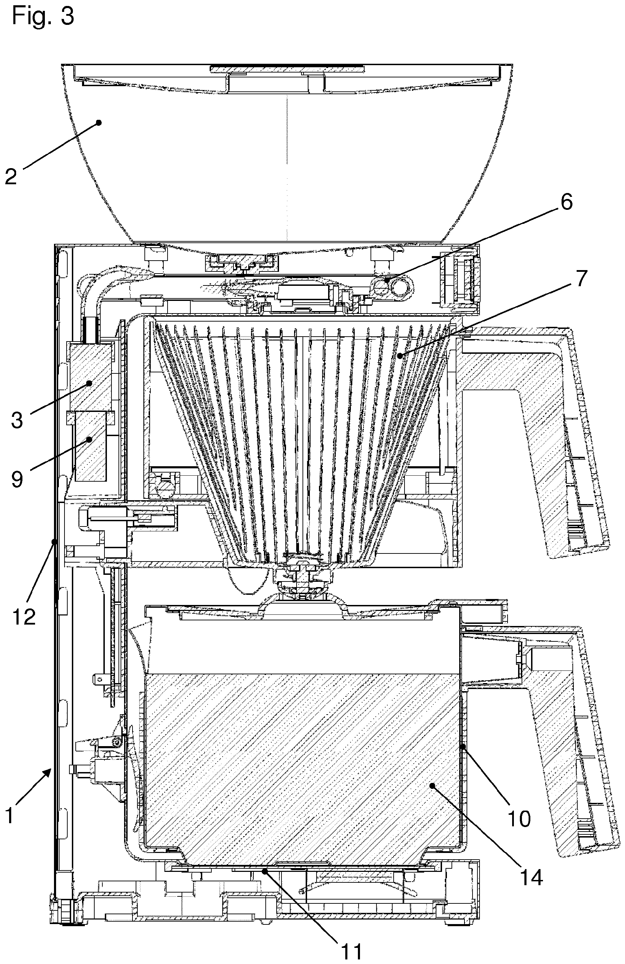

- Fig. 3: einen Schnitt gemäß den Pfeilen III - III in Fig. 2.

In den Figuren werden gleiche oder funktional gleiche Bauteile mit gleichen Bezugszeichen versehen.

Die in den Figuren abgebildete Vorrichtung umfasst ein Gehäuse 1, an dessen Oberseite ein Reservoir 2 für Wasser angeordnet ist. Die Vorrichtung umfasst weiterhin ein Ventil 3, zu dem von dem Reservoir 2 eine Wasserleitung 4 führt. Das Ventil 3 kann als Magnetventil ausgebildet sein. Die Vorrichtung umfasst weiterhin auf einer Leiterplatte 5 angeordnete Steuermittel, die das Ventil 3 öffnen und schließen können.

Ausgangsseitig ist an dem Ventil 3 ein als Heizmittel dienender Durchlauferhitzer 6 angeschlossen, von dem das durch das Ventil 3 hindurchgetretene Wasser erhitzt werden kann. An dem Gehäuse 1 ist ein Aufbewahrungsmittel 7 für ein Ausgangsmaterial für das Heißgetränk angeordnet, die im abgebildeten Ausführungsbeispiel als Filterhalter für Kaffeefilter ausgebildet ist. Das Aufbewahrungsmittel 7 kann aus dem Gehäuse 1 herausgeschwenkt oder herausgezogen werden.

In Strömungsrichtung hinter dem Durchlauferhitzer ist ein Temperatursensor 8 angeordnet, der die Temperatur des erwärmten Wassers vor der Überführung in den Filterhalter beziehungsweise den mit Kaffeepulver gefüllten Kaffee messen kann. Der Temperatursensor 8 kann beispielsweise als NTC-Sensor ausgebildet sein, der mit der Wasserleitung zu dem Aufbewahrungsmittel 7 in thermischem Kontakt steht.

Es ist zusätzlich ein Temperatursensor in dem Reservoir 2 angeordnet, um die Temperatur des in dem Reservoir 2 befindlichen Wassers zu messen. Weiterhin ist in dem Reservoir 2 ein Füllstandssensor vorgesehen, der den Füllstand des Wassers in dem Reservoir 2 bestimmen kann.

Die Vorrichtung umfasst weiterhin eine Pumpe 9, die das durch das Ventil 3 hindurchtretende Wasser durch den Durchlauferhitzer 6 zu dem mit Kaffeepulver gefüllten Filterhalter pumpt. Die Steuermittel steuern dabei die Pumpe 9 so an, dass die Verweildauer des Wassers in dem Durchlauferhitzer 6 in Abhängigkeit von den gemessenen Temperaturen geregelt wird. Wenn die Temperaturdifferenz zwischen der Temperatur in dem Reservoir 2 und der Temperatur hinter dem Durchlauferhitzer 6 groß ist, pumpt die Pumpe 9 vergleichsweise langsam, wohingegen bei kleinerer Temperaturdifferenz die Pumpe vergleichsweise schnell pumpt.

Die Vorrichtung umfasst weiterhin einen Aufnahmebehälter 10 für das zubereitete Heißgetränk 14 und separate Heizmittel 11 in Form einer Warmhalteplatte für das Warmhalten des Aufnahmebehälters 10. Dabei ist in an sich aus dem Stand der Technik bekannten Weise der Aufnahmebehälter 10 unterhalb des Aufbewahrungsmittels 7 angeordnet und dabei beispielsweise als Kanne ausgebildet.

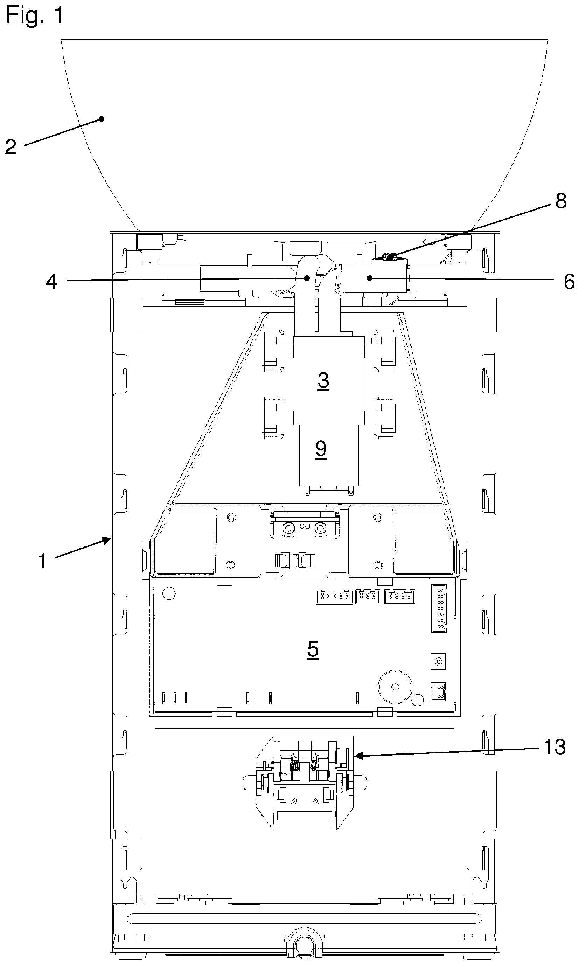

Die Vorrichtung umfasst weiterhin eine hintere Gehäuseabdeckung 12, die in Fig. 1 abgenommen ist. Weiterhin ist ein Sensor 13 vorgesehen, der detektiert, ob ein Aufnahmebehälter 10 unterhalb des Filterhalters angeordnet ist. Weiterhin ist ein nicht abgebildeter Sensor vorgesehen, der detektieren kann, ob die als Filterhalter ausgebildeten Aufbewahrungsmittel 7 in der in das Gehäuse 1 hereingeschwenkten oder hereingeschobenen Position sind. Nur wenn der Aufnahmebehälter 10 und das Aufbewahrungsmittel 7 korrekt eingesetzt sind, kann der Brühvorgang gestartet werden.

Weiterhin sind nicht abgebildete Bedienmittel vorgesehen, die beispielsweise Tasten für die Anzahl der zuzubereitenden Tassen aufweisen. Es besteht auch die Möglichkeit, dass als Bedienmittel ein Touchscreen vorgesehen ist. Ferner kann vorgesehen sein, dass die Vorrichtung ein von einem Benutzer aktivierbares Programm zum automatischen Entleeren des innerhalb des Reservoirs 2 aufgenommenen Wassers aufweist, das zum Beispiel durch längeres Drücken einer der Tasten der Bedienmittel oder durch Drücken einer Tastenkombination der Bedienmittel aktiviert werden kann.

Weiterhin kann die Vorrichtung optische und akustische Anzeige- und Signalmittel umfassen. Diese können beispielsweise signalisieren, dass für die gewählte Tassenanzahl zu wenig Wasser in dem Reservoir 2 vorhanden ist oder dass ein Entkalkungsvorgang durchgeführt werden muss. Wenn der Aufnahmebehälter 10 oder das Aufbewahrungsmittel 7 nicht beziehungsweise nicht korrekt eingesetzt sind, können die Anzeige- und Signalmittel aktiviert werden und einem Benutzer optisch und/oder akustisch signalisieren, dass der Brühvorgang nicht gestartet werden kann. Ferner kann das Ende des Brühvorgangs mittels der Anzeige- und Signalmittel optisch und/oder akustisch signalisiert werden.

Die Vorrichtung kann als Filterkaffeemaschine oder als Espressomaschine (nicht abgebildet) ausgebildet sein. Wenn die Vorrichtung als Espressomaschine ausgebildet ist, kann sie einen Wasserauslass aufweisen, aus dem das von dem Durchlauferhitzer erwärmte Wasser austritt. Unter dem Wasserauslass kann ein Aufnahmebehälter für das zubereitete Heißgetränk platziert werden, auf dem das insbesondere als Filterhalter für Kaffeefilter ausgebildete Aufbewahrungsmittel 7 angeordnet ist.

Weil der Wasserauslass bei Espressomaschinen in der Regel vergleichsweise niedrig angeordnet ist, kann ein Aufnahmebehälter vorgesehen sein, der einen in das Innere des Aufnahmebehälters zurückspringenden Deckel aufweist, so dass das insbesondere als Filterhalter für Kaffeefilter ausgebildete Aufbewahrungsmittel 7 ein Stück in den Aufnahmebehälter hineinragt. Dadurch wird die Wassereintrittshöhe des oberhalb des Aufnahmebehälters angeordneten Filterhalters verringert.

## Patentansprüche

1. Verfahren zur Zubereitung eines Heißgetränks, insbesondere eines Kaffees, umfassend folgende Verfahrensschritte:
- Bereithalten einer Wassermenge in einem Reservoir (2),
- Erhöhung der Temperatur einer dem Reservoir (2) entnommenen Wassermenge,
- Zuführen der aufgeheizten Wassermenge zu einem Ausgangsmaterial für das Heißgetränk,
**dadurch gekennzeichnet, dass** aus dem Reservoir (2) die Wassermenge entnommen wird, die für eine vorgegebene Menge des zuzubereitenden Heißgetränks benötigt wird.

2. Verfahren nach Anspruch 1, **dadurch gekennzeichnet, dass** die Temperatur der entnommenen Wassermenge gemessen wird, insbesondere vor dem Zuführen zu dem Ausgangsmaterial.

3. Verfahren nach einem der Ansprüche 1 oder 2, **dadurch gekennzeichnet, dass** die Erhöhung der Temperatur in einem Durchlauferhitzer (6) erfolgt, wobei insbesondere die Messung der Temperatur in Strömungsrichtung hinter dem Durchlauferhitzer (6) erfolgt.

4. Verfahren nach einem der Ansprüche 1 bis 3, **dadurch gekennzeichnet, dass** die Temperatur und/oder die Menge des Wassers in dem Reservoir (2) gemessen werden.

5. Verfahren nach einem der Ansprüche 3 oder 4, **dadurch gekennzeichnet, dass** die Verweildauer des Wassers in dem Durchlauferhitzer (6) in Abhängigkeit von der gemessenen Temperatur beziehungsweise den gemessenen Temperaturen geregelt wird, wobei insbesondere die Durchflussgeschwindigkeit durch Ansteuern einer Pumpe (9) geregelt wird, die das aus dem Reservoir (2) entnommene Wasser durch den Durchlauferhitzer (6) pumpt.

6. Verfahren nach einem der Ansprüche 1 bis 5, **dadurch gekennzeichnet, dass** bei einer Wassermenge in dem Reservoir (2), die kleiner ist als die Wassermenge, die für die Menge des zuzubereitenden Heißgetränks benötigt wird, ein von einem Benutzer wahrnehmbares Signal ausgegeben wird.

7. Verfahren nach einem der Ansprüche 1 bis 6, **dadurch gekennzeichnet, dass** zu Beginn des Zubereitungsvorgangs eine aufgeheizte Wassermenge, die kleiner ist als die Wassermenge, die für die Menge des zuzubereitenden Heißgetränks benötigt wird, dem Ausgangsmaterial für das Heißgetränk zugeführt wird, woraufhin die Wasserzuführung zu dem Ausgangsmaterial für eine vorgegebene Zeit unterbrochen wird.

8. Verfahren nach einem der Ansprüche 1 bis 7, **dadurch gekennzeichnet, dass** nach einer vorgegebenen Anzahl von Zubereitungsvorgängen seit der letzten Entkalkung ein von einem Benutzer wahrnehmbares Signal ausgegeben wird.

9. Vorrichtung zur Zubereitung eines Heißgetränks, insbesondere Filterkaffeemaschine und/oder Espressomaschine, umfassend
- ein Reservoir (2) für Wasser,
- Heizmittel, mit denen aus dem Reservoir (2) entnommenes Wasser erhitzt werden kann,
- Aufbewahrungsmittel (7) für ein Ausgangsmaterial für das Heißgetränk,
**dadurch gekennzeichnet, dass** die Vorrichtung Steuermittel (5) umfasst, die im Betrieb der Vorrichtung die Entnahme einer für eine vorgegebene Menge des zuzubereitenden Heißgetränks benötigten Wassermenge aus dem Reservoir (2) veranlassen, die die Heizmittel ansteuern, so dass sie die entnommene Wassermenge erhitzen, und die eine Zuführung der erhitzten Wassermenge zu dem Ausgangsmaterial für das Heißgetränk bewirken.

10. Vorrichtung nach Anspruch 9, **dadurch gekennzeichnet, dass** die Vorrichtung für die Durchführung eines Verfahrens nach einem der Ansprüche 1 bis 8 geeignet ist.

11. Vorrichtung nach einem der Ansprüche 9 oder 10, **dadurch gekennzeichnet, dass** die Heizmittel einen Durchlauferhitzer (6) umfassen oder als Durchlauferhitzer (6) ausgebildet sind, durch den Wasser aus dem Reservoir (2) hindurchfließen und erhitzt werden kann.

12. Vorrichtung nach einem der Ansprüche 9 bis 11, **dadurch gekennzeichnet, dass** die Vorrichtung ein Ventil (3) umfasst, das zwischen dem Reservoir (2) und den Heizmitteln angeordnet ist.

13. Vorrichtung nach einem der Ansprüche 9 bis 12, **dadurch gekennzeichnet, dass** die Vorrichtung mindestens einen Temperatursensor (8) umfasst, wobei der mindestens eine Temperatursensor in dem Reservoir (2) und/oder in Strömungsrichtung hinter den Heizmitteln angeordnet ist.

14. Vorrichtung nach einem der Ansprüche 9 bis 13, **dadurch gekennzeichnet, dass** die Vorrichtung einen Füllstandssensor umfasst, der in dem Reservoir (2) angeordnet ist.

15. Vorrichtung nach einem der Ansprüche 9 bis 14, **dadurch gekennzeichnet, dass** die Vorrichtung einen Aufnahmebehälter (10) für das zubereitete Heißgetränk (14) und separate Heizmittel (11) für das Warmhalten des Aufnahmebehälters (10) umfasst.
